# EUROPÄISCHE PATENTSCHRIFT

(11) **EP 3 152 064 B1**
(45) Veröffentlichungstag und Bekanntmachung des Hinweises auf die Patenterteilung: **29.07.2020**
(21) Anmeldenummer: 15726601.6
(22) Anmeldetag: 02.06.2015
(51) Int. Cl.: B42D 25/346, B42D 25/351, B42D 25/36, B42D 25/378, B44F 1/06, B44F 5/00, G06K 7/10, G07D 7/12

(54) **SICHERHEITSVORRICHTUNG UND AUTHENTIFIZIERUNGSVERFAHREN MIT DYNAMISCHEN SICHERHEITSMERKMALEN**
SECURITY DEVICE AND AUTHENTICATION METHOD WITH DYNAMIC SECURITY FEATURES
DISPOSITIF DE SÉCURITÉ ET PROCÉDÉ D'AUTHENTIFICATION PRÉSENTANT DES CARACTÉRISTIQUES DE SÉCURITÉ DYNAMIQUES

(30) Priorität: 04.06.2014 DE 102014007976
(43) Veröffentlichungstag der Anmeldung: 12.04.2017
(73) Patentinhaber: Kisters, Friedrich, 8280 Kreuzlingen (CH)
(72) Erfinder: Kisters, Friedrich, 8280 Kreuzlingen (CH)
(74) Vertreter: Patentanwälte Dr. Keller, Schwertfeger Partnerschaft mbB
(86) Internationale Anmeldenummer: PCT/EP2015/062227
(87) Internationale Veröffentlichungsnummer: WO 2015/185536

(56) Entgegenhaltungen:
- WO-A1-2005/048182
- WO-A2-03/081522
- WO-A2-2005/025891
- WO-A2-2011/006640
- US-A1- 2004 229 022
- US-A1- 2006 131 518

## Beschreibung

### Technisches Gebiet:

Die vorliegende Erfindung betrifft eine Sicherheitsvorrichtung und ein Authentifizierungsverfahren, bei dem ein über eine Abtasteinrichtung detektierbarer Stoff oder eine Stoffzusammensetzung in oder auf einem Trägermaterial mit einem eingebetteten dreidimensionalen Muster ein- oder abgelagert und auf dem Sicherheitselement neu aufbringbar oder von diesem entfernbar ist. Dadurch entsteht ein zumindest teilweise verändertes Erscheinungsbild, welches zu einem weiteren Authentifizierungszeitpunkt von der Abtasteinrichtung erfassbar und in einem Speichermittel als aktualisierte Version hinterlegbar ist.

### Stand der Technik:

Zum Schutz von Dokumenten, Gegenständen, Waren, aber auch für die Authentifizierung von Telekommunikationseinrichtungen oder Personen ist eine Vielzahl von Verfahren und Vorrichtungen bekannt. Viele der Verfahren basieren auf statischen Sicherheitsmerkmalen, beispielsweise Nummern, Passwörtern, biometrischen Merkmalen oder besitzen einen komplexen statischen Aufbau, um die Fälschungssicherheit zu erhöhen. So beschreibt das US-Patent 5,719,948 eine Vorrichtung und ein Verfahren zum fluoreszenten Abbilden und optischen Zeichenlesen, das US-Patent 5,697,649 Gegenstände mit magnetischen Sicherheitsmerkmalen und das US-Patent 5,568,251 ein Material, das bei Absorption, Reflexion oder Transmission anisotrop ist.

Eine andere Gruppe von Verfahren basiert auf eindeutigen physikalischen oder chemischen Sicherheitsmerkmalen auf der Oberfläche eines Dokuments oder Produkts. Zu diesem Zweck wird ein Abschnitt der Oberfläche entsprechend den zuvor ausgewählten physikalischen Kennmerkmalen abgetastet und das abgetastete Bild kodiert und/oder verschlüsselt. Das erhaltene Ergebnis wird auf die Oberfläche des Gegenstands oder Dokuments in Form einer Zahl oder eines Codes aufgebracht. Beim Prüfen der Authentizität wird die Oberfläche durch ein Testgerät abgetastet. Die dadurch erhaltenen Daten werden mit den hinterlegten Daten verglichen. Ein solches Verfahren ist beispielsweise in der WO 97/24699 A beschrieben.

Die WO 98/57299 beschreibt ein Dokument mit einem Echtheitsmerkmal, das durch eine Vielzahl von in einem Trägermaterial eingelagerten Kennzeichen gebildet wird. Diese Kennzeichen sind im Trägermaterial willkürlich bezüglich ihrer Lage, ihrer Verteilungsdichte und ihrer räumlichen Position im Trägermaterial angeordnet. Dadurch gehen bei der Herstellung der Dokumente stets Unikate hervor, die auch eine bewusste Duplizierung nahezu unmöglich machen. Bei dem Kennzeichen kann es sich beispielsweise um Textil- oder Zellulosefasern, metallische Stoffe oder Kunststoffe oder anorganische Stoffe wie Graphitfasern handeln. Daneben eignen sich als Kennzeichen ebenso kratzerartige Vertiefungen bzw. Erhebungen im bzw. am Trägermaterial. Die Vertiefungen bzw. Erhebungen weisen dabei unterschiedlichste Breiten-, Tiefen- oder Höhenabmessungen und/oder -verläufe auf. Daneben können Hohlräume gebildet sein, die sich im Trägermaterial porenartig ausbilden. Über eine Lesevorrichtung werden diese Sicherheitsmerkmale abgetastet. Zwar weisen solche Sicherheitsmerkmale ein komplexes Muster auf, jedoch bleiben sie nach deren Herstellung für nachfolgende Sicherheitsabfragen unverändert. Über moderne 3-D-Druckverfahren wäre es zudem möglich, solche starren Strukturen trotzdem zu fälschen.

In der WO 01/043086 wird vorgeschlagen, dass ein eindeutiges Bild als zweidimensionales Zufallsbild erzeugt und auf eine gewählte Fläche aus einem Material aufgebracht wird, welches eine raue Oberfläche mit willkürlichen Merkmalen aufweist. Dazu können beispielsweise Materialien mit einer rauen Oberfläche wie faseriges, poröses oder mit Einschlüssen von Partikeln versehenes Material verwendet werden. Das Verfahren sieht in einer Ausführungsform ferner vor, dass das Zufallsbild mit willkürlichen Parametern weiter modifiziert wird, beispielsweise indem die Oberfläche zufällig bearbeitet wird, beispielsweise durch Perforation. Auch hier verändert sich das zweidimensionale Zufallsbild nach dessen Fertigstellung nicht mehr. Zwar wird ein Material mit rauer Oberfläche mit Zufallsparametern verwendet, welches die Fälschungssicherheit erhöhen soll, jedoch bleibt auch dieses Material zwischen zwei Authentifizierungszeitpunkten statisch und damit fälschungsanfällig.

In der DE 10 2004 049 139 A1 sind eine Vorrichtung und ein Verfahren zum Schutz eines Gegenstandes vor Fälschen oder Kopieren beschrieben, bei der der Gegenstand mit einer Sendeeinrichtung zum Aussenden von Licht ausgestattet ist, wobei sich das Licht der Sendeeinrichtung in der Intensität und/oder der spektralen Zusammensetzung zeitlich verändert, Die zeitliche Veränderung des Lichts ist dabei so gewählt oder eingestellt, dass sie vom menschlichen Sehsinn wahrnehmbar ist. Hier stellt die dynamische Veränderung des Lichts ein dynamisches Sicherheitsmerkmal dar. Bei dem Verfahren wird die Eigenschaft ausgenutzt, dass sich das Licht dynamisch ändert, was auf jedes dieser Sicherheitselemente gleichermaßen zutrifft, unabhängig davon, welches Licht sie gerade ausstrahlen. Eine Identifikation des einzelnen Sicherheitselementes unter Berücksichtigung der Veränderungen ist somit nicht gegeben. Wird ein solches Sicherheitselement erfolgreich kopiert, lässt sich dessen Fälschung folglich nicht mehr von dem Original unterscheiden, ähnlich wie dies bei Kopien von Hologrammen der Fall ist.

In der DE 10 2006 006 323 A1 wird ein Mehrschichtkörper mit einer optisch maschinell lesbaren Kennung beschrieben, der eine Kunststoffschicht aufweist, in der mikroskopisch feine Reliefstrukturen eingearbeitet sind. Dabei weisen unterschiedliche Bereiche verschiedene Reliefstrukturen auf und bilden ein Hintergrundmuster, das als Sicherheitsmerkmal dienen kann. Jedoch ist auch dieses Hintergrundmuster zwischen mehreren Authentifizierungszeitpunkten starr ausgebildet.

In der WO 2012/038842 wird ein Sicherheitselement beschrieben, das fälschungssicher sein soll. Hierbei wird ein Material mit einer Oberfläche gewählt, das "deterministische" Unebenheiten aufweist. Ferner werden Teilchen verwendet, die so dimensioniert sind, dass sie durch die Unebenheiten der Oberfläche gefangen werden können. Daneben können die Teilchen sich zufällig auf der Oberfläche abscheiden, um so eine komplexe, individuelle Oberfläche zu erzeugen. Die Teilchen können beispielsweise einen fluoreszierenden Farbstoff aufweisen, um über eine Leseeinrichtung abgetastet werden zu können. Unter einem Fluoreszenzmikroskop können fluoreszierende Farben der in den Strukturen eingelagerten Kügelchen erkannt werden. Vorzugsweise kommen unterschiedliche Fluoreszenzfarbstoffe zum Einsatz, welche bei Anregung unterschiedliche Farben emittieren. Bei dem Verfahren wird über eine zufällige Abscheidung ein stark individualisiertes, aber dennoch statisches Sicherheitselement geschaffen, bei dem auch nur das daraus entstehende statische Erscheinungsbild, nicht aber ein sich veränderndes Erscheinungsbild und etwaige dynamische Weiterentwicklungen der Sicherheitsmerkmale zwischen zwei Authentifizierungszeitpunkten verglichen werden. Zu diesem Zweck wird der jeweilige Endzustand fixiert.

Die DE 10 2009 033 221 bzw. die WO 2011/006640 A1 beschreibt ein Sicherheitselement und ein Verfahren zur Kennzeichnung, Authentifikation oder Identifikation von Gegenständen oder Personen, bei dem wenigstens eine Schicht des Sicherheitselements zumindest bereichsweise ein Krakelee-Muster in Form von Rissen oder Sprüngen, Ausbrüchen, Abnutzungen oder Schrumpfungen sowie mögliche Verunreinigungen aufweist, die gemeinsam oder getrennt als Sicherheitsmerkmal abtastbar und erfassbar sind. In einer Ausführungsvariante kann das Krakelee-Muster durch Auftrag von Pigmenten (Einfärben) sichtbar gemacht werden, welches sich in den feinen Rissen und Sprüngen absetzt. Ein solches Krakelee lässt sich visuell nach Verunreinigung bzw. Einfärben mit einem normalen Krakelee so kombinieren, dass insgesamt ein anderes Krakelee sichtbar wird.

Die WO 2005/048182 A1 beschreibt einen Datenträger, in dem mittels eines Laserstrahls Kennzeichnungen eingebracht sind, die in Form von durch den Laserstrahl bewirkten irreversiblen Änderungen der optischen Eigenschaften des Trägers sichtbar sind.

Die US 2004/0229022 A1 beschreibt eine Validierungsvorrichtung, die einen mehrschichtigen Aufbau aufweist und bei der fluoreszierende Partikel auf einem Substrat als Sicherheitsmerkmal eingesetzt werden.

Die WO 2005/025891 A2 beschreibt einen Datenträger, beispielsweise eine Ausweiskarte, mit einem auf seiner Oberfläche angeordneten Foliensicherheitselement, welches einen Durchbrechungsbereich aufweist, durch den ein darunter liegendes Sicherheitsmerkmal des Datenträgers erkennbar ist. Dabei kann eine Sicherheitsschicht vorgesehen sein, die durch eine fluoreszierende, Partikel enthaltende Druckschrift gebildet ist.

### Darstellung der Erfindung:

Vor diesem Hintergrund ist es Aufgabe der vorliegenden Erfindung, eine alternative Sicherheitsvorrichtung bzw. ein Authentifizierungsverfahren bereitzustellen, mit dem die Fälschungssicherheit durch den Einbezug dynamischer Veränderungen zusätzlich erhöht wird.

Gelöst wird diese Aufgabe durch eine Sicherheitsvorrichtung mit den Merkmalen des Anspruchs 1 und ein Authentifizierungsverfahren mit den Merkmalen des Anspruchs 10. Bevorzugte Ausführungsformen finden sich in den Unteransprüchen wieder.

Die in Anspruch 1 definierte erfindungsgemäße Sicherheitsvorrichtung umfasst ein Sicherheitselement, welches ein Trägermaterial umfasst, in dem ein dreidimensionale Muster mit Strukturen wie beispielsweise Rissen, Rillen, Abplatzungen, Vertiefungen, Schuppen, Erhebungen und/oder Schrumpfungen als statisches oder dynamisches Sicherheitsmerkmal eingebettet ist. Ein Muster im Sinne der vorliegenden Erfindung umfasst beliebige Strukturen, Oberflächen, Geometrien oder Unebenheiten in oder auf dem Trägermaterial. Vorzugsweise handelt es sich bei dem Muster um "zufällige" Unebenheiten oder Strukturen, die keiner bestimmten Ordnung oder Logik unterliegen. Daneben sind auch "gewollte", vordefinierte oder symmetrische Strukturen oder Formen umfasst. Das so aufgebaute Sicherheitselement kann beispielsweise auf einem Geldschein, einem Pass, einem Dokument, einer Verpackung oder einem Gegenstand bzw. einem Tier oder einer Person aufgebracht werden. Die Sicherheitsvorrichtung umfasst ferner eine Abtasteinrichtung zum Erfassen eines Abbildes des Sicherheitselementes oder eines Teils davon. Bei der Abtasteinrichtung kann es sich beispielsweise um eine Optikeinrichtung (z.B. Kamera, Mikroskop, Scanner) handeln. In einer bevorzugten Variante ist die Abtasteinrichtung Bestandteil einer Telekommunikationseinrichtung, beispielsweise eines Smartphones oder eines Mobiletelefons. Bei der Sicherheitsvorrichtung ist ferner ein Speichermittel zum Hinterlegen des mit der Abtasteinrichtung erfassten Abbildes des Sicherheitselementes zu einem Authentifizierungszeitpunkt vorgesehen. Bei dem Speichermittel kann es sich beispielsweise um eine Datenbank handeln, in der die übermittelten Daten auf einem Magnetspeicher oder einer Festplatte hinterlegt sind. Der Authentifizierungszeitpunkt ist der Zeitpunkt, bei dem eine Authentifizierung eines Gegenstandes, einer Person, einer Dienstabfrage, eines Softwarezugriffes oder eine sonstige, durch ein Ereignis ausgelöste Zugriffskontrolle erfolgt. Beim Authentifizierungszeitpunkt wird das Erscheinungsbild des Sicherheitselementes oder eines Teils davon erfasst und in dem Speichermittel hinterlegt. Falls erforderlich, können die von dem Erscheinungsbild erhaltenen Daten modifiziert oder verschlüsselt werden, um einen möglichen Datendiebstahl zu erschweren oder zu verhindern. Das Erscheinungsbild entspricht dem optischen Aussehen und der Zusammensetzung des Sicherheitselementes, entweder mit bloßem Auge betrachtet oder unter Hinzunahme von Hilfsmitteln, beispielsweise optischen Abtasteinrichtungen wie Kamera, Mikroskop oder Scanner. Dabei können die eingesetzten Hilfsmittel erst dafür sorgen, dass das Erscheinungsbild für das menschliche Auge überhaupt sichtbar wird, beispielsweise wenn mit besonderer Vergrößerung der Abtasteinrichtung oder speziellem Licht gearbeitet wird.

Erfindungsgemäß ist nun vorgesehen, dass ein über die Abtasteinrichtung detektierbarer Stoff oder eine Stoffzusammensetzung zumindest teilweise auf dieser Oberfläche abgelagert wird, so dass sich dieser/diese oder das in dem Trägermaterial eingebettete dreidimensionale Muster dynamisch verändert. Die Ablagerung kann beliebig wiederholt werden und teilweise oder ganz entfernbar sein. Dadurch verändern sich beispielsweise die Farbe, die Intensität, die Struktur, die Schichtdicke, die Oberfläche oder eine physikalische Eigenschaft des Trägermaterials und/oder des darin eingebetteten dreidimensionalen Musters des Sicherheitselementes. Als Ergebnis entsteht ein zumindest teilweise verändertes Erscheinungsbild, welches zu einem zweiten, nachfolgenden Authentifizierungszeitpunkt von der Abtasteinrichtung erfassbar und als aktuelles Erscheinungsbild in dem Speichermittel hinterlegbar ist. Das dynamische Aufbringen oder Ablösen des detektierbaren Stoffes oder der Stoffzusammensetzung auf dem Trägermaterial hinterlässt somit ein modifiziertes Erscheinungsbild, welches sich von dem zum ersten Authentifizierungszeitpunkt in dem Speichermittel hinterlegten Erscheinungsbild in wesentlichen Merkmalen unterscheidet. Dennoch können ursprüngliche Strukturen des Sicherheitselementes erhalten bleiben, um so beispielsweise eine Vor-Authentifizierung des Sicherheitselementes zu ermöglichen. Vorzugsweise betrifft die dynamische Veränderung daher nur einen Teil des Sicherheitselementes.

Vorzugsweise handelt es sich bei dem Trägermaterial um eine farbige Schicht, eine Farbschicht, eine Metallschicht, ein Material mit darin enthaltenen Farbpigmenten, Metallionen, Salzen oder strahlungsaktiven Stoffen. Es sind somit Materialien, die über eine Abtasteinrichtung oder Detektionseinrichtung erfassbar sind. Strahlungsaktive Stoffe sind beispielsweise fluoreszierende, lumineszierende oder radioaktive Stoffe. Die Einlagerung von radioaktiven Stoffen erfolgt in geringen, aber detektierbaren Konzentrationen, so dass keine Gefahr für Leben oder Umwelt besteht. Ferner kann das Trägermaterial auch von einer Schutzschicht, beispielsweise einem Schutzlack, überzogen sein. In einer besonderen Variante ist das Trägermaterial nur für die Abtasteinrichtung detektierbar, für das menschliche Auge jedoch ohne Hilfsmittel nicht sichtbar.

Vorzugsweise wird als Trägermaterial eine Farbschicht oder eine Materialschicht mit darin eingelagerten Farbpigmenten verwendet. Dabei kann es vorgesehen sein, dass die Farbschicht unterschiedliche Farbintensitäten oder Farbstoffe aufweist. Dies hängt im Wesentlichen von der Art und Konzentration der Farbpigmente und der Schichtstärke des Trägermaterials ab. Ferner können lichtabsorbierende Materialien, beispielsweise eine Schutzschicht, auf dem Trägermaterial aufgetragen sein, so dass die Farbintensität bei Erfassung mit einer optischen Einrichtung entweder verstärkt oder abgedämpft wird. Vorzugsweise wird ein Farbstoff gewählt, dessen Zusammensetzung zur Erzielung eines Farbeindrucks bekannt ist. Dabei ist vorzugsweise vorgesehen, dass die Abtasteinrichtung das Trägermaterial und dessen Zusammensetzung identifiziert.

Eine Schicht, die Metallionen enthält, eine Metallschicht oder eine Legierung kann über entsprechende Metalldetektoren nachgewiesen werden. Kennzeichnend ist jedoch, dass durch die Einlagerung oder das Ablösen des detektierbaren Stoffes oder der Stoffzusammensetzung das Trägermaterial und damit das Erscheinungsbild des Sicherheitselementes verändert werden. Diese Veränderung kann langsam oder schnell, nur teilweise und/oder temporär sein und durch äußere Einflüsse weiter beschleunigt oder verlangsamt werden. Eine temporäre Veränderung weist eine besondere Dynamik auf, die es einem Fälscher nahezu unmöglich macht, das Sicherheitselement zu kopieren bzw. einzusetzen. Der Fälscher weiß zu einem gegebenen Authentifizierungszeitpunkt nicht, welches aktuelle Erscheinungsbild zu diesem Zeitpunkt in dem Speichermittel (z.B. Datenbank) hinterlegt ist. Die Einlagerung eines Stoffes oder einer Stoffzusammensetzung führt dazu, dass die Strukturen des dreidimensionalen Musters sich verändern, da entweder neue Stoffe in den Strukturen eingelagert oder bereits vorhandene Stoffe aus diesen entfernt werden. Daneben können sich auch Verlagerungen der detektierbaren Stoffe innerhalb der Strukturen ausbilden.

Zur Erhöhung der Sicherheit schrumpft, verändert oder entwickelt sich das Erscheinungsbild des Musters oder das Muster in dem Trägermaterial in einem vorgegebenen Zeitraum vorzugsweise dynamisch weiter. Beispielsweise können sich die Strukturen aufgrund einer chemischen oder physikalischen Einwirkung wie z.B. eines detektierbaren Stoffes oder einer mechanischen Einflussnahme verändern, indem neue Risse hinzukommen, Farbe abfällt, die Schichtstärke der Farbschicht verändert wird oder bestehende Risse sich vergrößern oder verkleinern. Wenn das Trägermaterial eine Farbschicht ist, können sich innerhalb der Farbschicht sogenannte Krakelee-Strukturen ausbilden, d.h. zufällige Risse und Sprünge, welche die geschlossene Oberflächenstruktur des Trägermaterials durchbrechen. In den darin ausgebildeten Strukturen werden wiederum die detektierbaren Stoffe oder Stoffzusammensetzungen eingelagert. Hierfür liegt der detektierbare Stoff oder die Stoffzusammensetzung vorzugsweise als Pulver, Granulat, Gel oder Suspension vor. Um die Komplexität der dynamischen Strukturen weiter zu erhöhen, ist erfindungsgemäß vorgesehen, dass unterschiedliche detektierbare Stoffe in dem Trägermaterial und/oder dem Muster eingelagert sind. Dies können entweder unterschiedliche Farbstoffe sein oder eine Kombination von detektierbaren Stoffen, die über unterschiedliche Detektionsmittel nachweisbar sind. Beispielsweise können Metallpartikel zusammen mit Farbpigmenten oder fluoreszierenden Partikeln vermengt werden. Eine Kombination dieser detektierbaren Stoffe erhöht die Sicherheit und dynamische Veränderbarkeit des dreidimensionalen Musters zusätzlich.

Ferner können auch unterschiedliche Konzentrationen der detektierbaren Stoffe als Sicherheitsmerkmal verwendet werden, wenn sie eine Veränderung einer physikalischen Eigenschaft bewirken. Natürlich muss die Abtasteinrichtung in der Lage sein, die unterschiedlichen detektierbaren Stoffe physikalisch zu erfassen. In einer Ausführungsform kann vorgesehen sein, dass zu einem bestimmten Zeitpunkt die Oberfläche des Sicherheitselementes mit einem Farbpulver in flüssiger oder trockener Form behandelt wird, wodurch sich die einzelnen Partikel in die Strukturen des dreidimensionalen Musters einlagern. Vorzugsweise wird hierfür ein Pulver, ein Granulat, ein Gel oder eine Suspension eingesetzt. Eine flüssige Suspension oder ein Gel kann leicht in die Strukturen des Musters fließen und diese zumindest partiell ausfüllen. Durch das Ausfüllen der Strukturen mit dem detektierbaren Stoff oder der Stoffzusammensetzung erhält man ein verändertes Erscheinungsbild des Sicherheitselementes. Die Einlagerung des detektierbaren Stoffes oder der Stoffzusammensetzung in dem Trägermaterial erfolgt vorzugsweise nur zeitweise, d.h. bei Bedarf kann das Pulver von dem Sicherheitselement wieder entfernt werden oder fällt von alleine wieder ab. Dabei ist das Trägermaterial vorzugsweise aus einem detektierbaren Stoff zusammengesetzt, der sich zeitlich zersetzt, von dem Trägermaterial ablöst, sich farblich umwandelt oder auf andere Weise verändert. Auch hierdurch ändert sich das von der Abtasteinrichtung erfassbare Erscheinungsbild des Trägermaterials und/oder des darin eingebetteten Musters.

Erfindungsgemäß ist das Trägermaterial des Sicherheitselementes von einer fluoreszierenden Schicht mit darin integrierten fluoreszierenden Partikeln als zusätzliches Sicherheitsmerkmal begrenzt. Beispielsweise kann die fluoreszierende Schicht oder die Fluoreszenzschicht unterhalb des Trägermaterials angeordnet sein. Je nach Ausgestaltung, Art und Schichtdicke des Trägermaterials sind die fluoreszierenden Partikel der Fluoreszenzschicht mit unterschiedlichen Intensitäten sichtbar oder nicht sichtbar. Aufgrund der Strukturen des dreidimensionalen Musters ist die Fluoreszenz bzw. sind die fluoreszierenden Partikel an den Stellen sichtbar, an denen entweder die Schichtdicke des Trägermaterials sehr dünn ist (so dass die Fluoreszenz durchstrahlen kann) oder wo das Trägermaterial Strukturen wie Risse, Schuppen, Rillen oder Ausbrüche aufweist, so dass die Fluoreszenz bzw. die fluoreszierenden Partikel durch diese Strukturen detektierbar sind. Wird zu dem zweiten, nachfolgenden Authentifizierungszeitpunkt der detektierbare Stoff oder die Stoffzusammensetzung auf das Sicherheitselement neu aufgebracht oder von diesem entfernt, verändert sich auch das Erscheinungsbild der begrenzenden Fluoreszenzschicht bzw. der darin eingelagerten fluoreszierenden Partikel. Fluoreszenzpartikel, die zuvor sichtbar waren und durch eine Struktur des dreidimensionalen Musters hindurchschienen, sind bei einer überlagerten Struktur abgeschottet und somit nicht mehr oder mit geringerer Intensität sichtbar. Somit ist in einer bevorzugten Variante vorgesehen, dass die fluoreszierenden Partikel der fluoreszierenden Schicht hauptsächlich durch die Strukturen des Musters oder durch Bereiche des Trägermaterials mit geringerer oder transparenterer Schichtstärke als das Umgebungsmaterial sichtbar sind. Zum Zweck der vorliegenden Erfindung sind beliebige Fluoreszenzfarbstoffe einsetzbar. Der detektierbare Stoff oder die Stoffzusammensetzung kann in einer Variante dieselbe Materialzusammensetzung aufweisen wie das Trägermaterial.

Die Abtastung mit der Abtastvorrichtung kann mit unterschiedlichen Winkeln oder Ansichten erfolgen. Vorzugsweise werden bei der Abtastung dreidimensionale Tiefeninformationen aus den Strukturen des Trägermaterials gewonnen. Dies kann beispielsweise über photometrische Methoden erfolgen, beispielsweise mittels Erstellung eines Höhenfeldes, der Anwendung von strukturiertem Licht, unterschiedlichen Beleuchtungswinkeln oder durch Stereofotografie. Daneben bieten auch Interferometer oder Auflichtmikroskope ähnliche Ergebnisse. Die Hinzunahme von Tiefeninformationen stellt ein zusätzliches Sicherheitsmerkmal dar, da sie die die 3-D-Struktur originalgetreu wiedergeben, was es einem Fälscher nahezu unmöglich macht, diese Informationen zu rekonstruieren.

In einer weiteren bevorzugten Ausführungsform wird das Sicherheitselement mit Strahlung unterschiedlicher Anregungswellenlängen abgetastet. So erscheinen die für das menschliche Auge sichtbaren Erscheinungsbilder des Sicherheitselementes je nach Strahlungsquelle gänzlich unterschiedlich, beispielsweise wenn das Sicherheitselement vergleichsweise mit natürlichem Licht, polarisierendem Licht oder mit fluoreszierendem Licht analysiert wird. Die feinen Konturen und Abschattungen des Trägermaterials, die Strukturen des Musters und die Schichtdicke des Trägermaterials ergeben unter polarisierendem Licht ein individuelles Erscheinungsbild, welches sich von dem durch nicht polarisiertes Normallicht erzeugten Erscheinungsbild oder dem Fluoreszenzbild unterscheidet.

Je nach Strahlungsquelle enthält man somit von demselben Sicherheitselement völlig unterschiedliche Erscheinungsbilder, die jedoch wiederum voneinander abhängen. Wird die Zusammensetzung oder Struktur der Trägerschicht, des Musters oder der Fluoreszenzschicht verändert, so verändern sich zwangsläufig zumindest teilweise auch die Erscheinungsbilder, die bei einer Analyse unter Normallicht, polarisierendem Licht oder Fluoreszenzlicht erhalten werden. Die über die einzelnen Strahlungsquellen erhaltenen Erscheinungsbilder werden zu einem Abfragezeitpunkt erfasst und in einer Datenbank hinterlegt. Zusätzliche Sicherheit erhält man durch Datenteilung, d.h. die Erscheinungsbilder würden in unterschiedlichen Datenbanken hinterlegt werden. Bei einer Authentifizierungsanfrage könnte dann eine Abfrage an die jeweiligen Datenbanken erfolgen, wobei zur Authentifizierung ein oder mehrere Erscheinungsbilder hinzugezogen werden. Die Kombination und Einmaligkeit dieser Erscheinungsbilder machen es einem Fälscher nahezu unmöglich, das Sicherheitselement mit vertretbarem Aufwand zu kopieren.

Ein besonderes Merkmal des erfindungsgemäßen Authentifizierungsverfahrens ist ferner darin zu sehen, dass der detektierbare Stoff oder die Stoffzusammensetzung das in dem Trägermaterial eingebettete dreidimensionale Muster dynamisch verändert, indem bedarfsweise der Stoff oder die Stoffzusammensetzung auf dem Sicherheitselement durch einen inneren oder äußeren Einfluss neu aufgebracht oder entfernt wird, wodurch sich die Farbe, die Intensität, die Struktur, die Schichtdicke oder eine andere physikalische Eigenschaft des Trägermaterials und/oder des darin eingebetteten dreidimensionalen Musters des Sicherheitselementes zumindest zeitweise verändern. Die Einlagerung oder das Ablösen von Stoffen in die Strukturen des Trägermaterials führt zu einem veränderten Erscheinungsbild, das sich zumindest teilweise von dem Erscheinungsbild eines früheren Zeitpunktes unterscheidet. Somit erhält man aufgrund des Aufbringens oder Ablösens des detektierbaren Stoffes oder der Stoffzusammensetzung zwischen zwei Authentifizierungszeitpunkten unterschiedliche Erscheinungsbilder desselben Sicherheitselementes. Daneben können sich auch Eigenschaften des Trägermaterials selbst, des dreidimensionalen Musters oder der an das Trägermaterial angrenzenden fluoreszierenden Schicht verändern. Beispielsweise können Risse der Struktur des dreidimensionalen Musters sich vergrößern, weiterentwickeln oder schrumpfen. Ferner können neue Risse oder andere Strukturen ausgebildet werden. Das zeitweise Einbringen eines detektierbaren Stoffes oder einer Stoffzusammensetzung des dreidimensionalen Musters bewirkt auch eine Veränderung der angrenzenden fluoreszierenden Schicht. Somit liegt eine Kombination von Sicherheitsmerkmalen vor, die zusammen oder einzeln als Authentifizierungsmerkmal herangezogen werden können.

### Kurze Beschreibung der Zeichnungen:

Die Erfindung wird in den nachfolgenden Zeichnungen näher erläutert.

### Wege zur Ausführung der Erfindung und gewerbliche Verwertbarkeit:

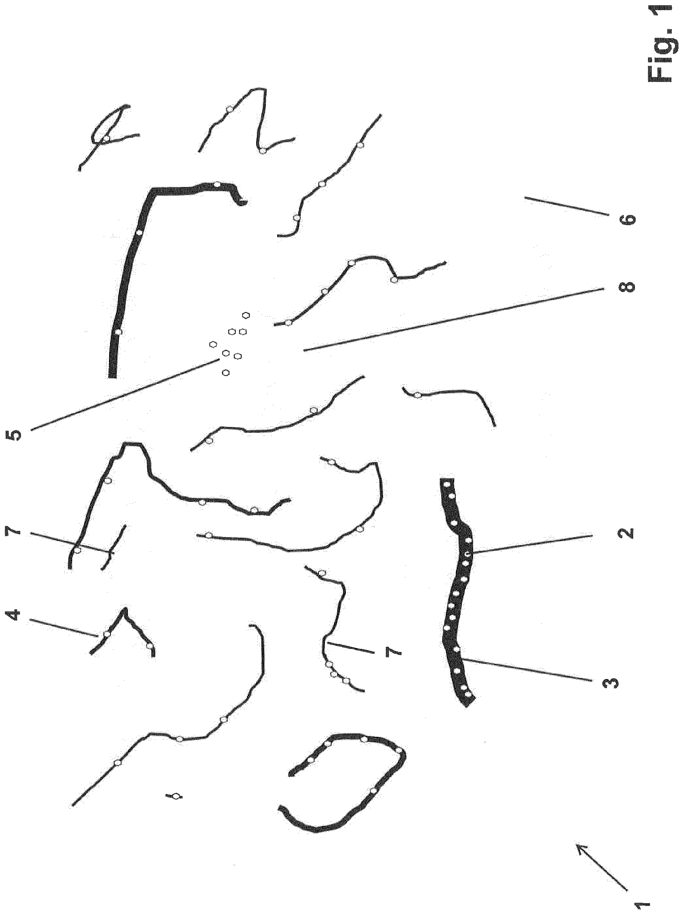

In Fig. 1 ist ein Sicherheitselement 1 gezeigt, das aus einer Grundplatte und einem Trägermaterial 6 besteht. Bei dem Trägermaterial 6 handelt es sich um eine Farbschicht, in der farbige Pigmente enthalten sind. In dem Trägermaterial 6 befinden sich unterschiedliche geometrische Muster 4, welche in der gezeigten Ausführungsform als Risse und Ausbrüche dargestellt sind. Solche Risse oder Ausbrüche können beispielsweise durch Austrocknung oder Schrumpfung einzelner Bereiche der Farbschicht entstehen. Unterhalb der Farbschicht als Trägermaterial 6 befindet sich eine fluoreszierende Schicht 3, in der einzelne Fluoreszenzpartikel 2 angeordnet sind. Aufgrund der Rissbildung des Trägermaterials 6 (Farbschicht) sind die Fluoreszenzpartikel 2 durch die Strukturen des geometrischen Musters 4 detektierbar. Die Fluoreszenzpartikel 2 sind insbesondere an den Stellen sichtbar, wo kein Trägermaterial 6 vorhanden ist oder an den Stellen, wo die Schichtstärke des Trägermaterials 6 sehr gering ist. Solche Bereiche geringer Schichtstärke 5 führen dazu, dass die Fluoreszenz der Fluoreszenzpartikel 2 hindurchstrahlt und durch die Abtasteinrichtung detektierbar ist. Daneben gibt es Abschattungen 7, die in Bereichen des Musters 4 auftreten können und ebenfalls eine charakteristische Struktur bzw. Erscheinungsbild ausbilden. Schließlich gibt es auch Bereiche im Trägermaterial 6, in denen einzelne Pigmente oder Pigmentansammlungen 8 stärker oder schwächer hervorgehoben sind als die umliegenden Bereiche des Trägermaterials 6.

Zur dynamischen Veränderung des Sicherheitselementes wird in einem weiteren Schritt ein Farbpulver auf das Trägermaterial 6 aufgetragen, welches sich in die Struktur des geometrischen Musters 4 oder des Trägermaterials 6 einlagert und einzelne oder mehrere fluoreszierende Partikel 2 verdeckt oder neue einbringt. Durch die Behandlung des Sicherheitselementes 1 mit Farbpulver wird daher sowohl die Struktur des geometrischen Musters 4 als auch die Intensität der fluoreszierenden Partikel 2 verändert. Daneben verändert sich unter Umständen auch die Schichtdicke des Trägermaterials 6, so dass zuvor fluoreszente Bereiche mit geringer Schichtstärke 5 derart abgeschirmt sind, dass die darunter liegenden Fluoreszenzpartikel 2 nicht mehr hindurchstrahlen können.

Zum Ablösen des Farbpulvers kann das Sicherheitselement beispielsweise abgeklopft werden, damit sich das Farbpulver oder Teile davon wieder aus den Strukturen des geometrischen Musters 4 löst/lösen. Dies bewirkt wiederum eine Änderung des Erscheinungsbildes, was zum Abtastzeitpunkt von der Abtasteinrichtung erfassbar ist.

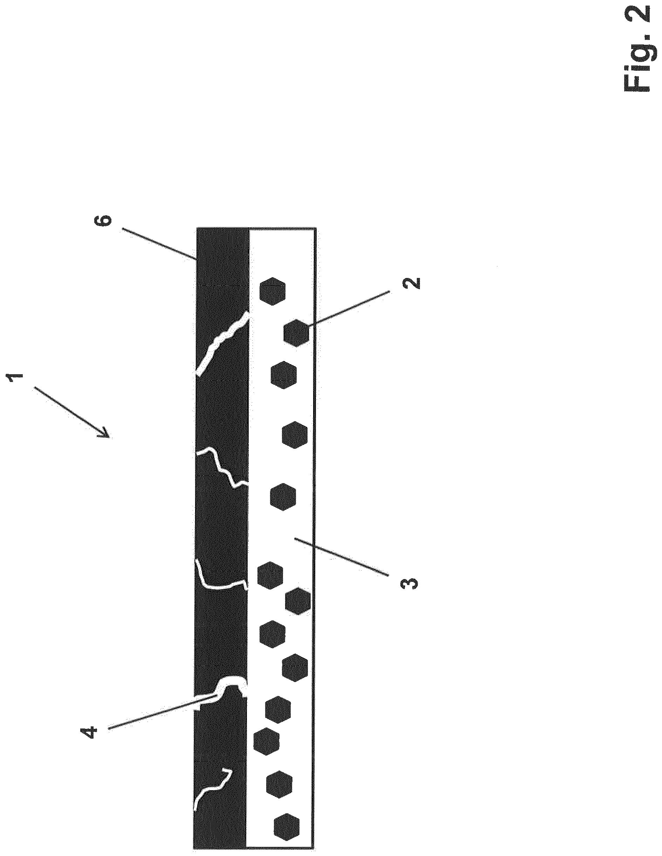

In Fig. 2 ist das Sicherheitselement 1 im Querschnitt gezeigt. Unterhalb einer Farbschicht als Trägermaterial 6 ist eine fluoreszierende Schicht 3 ausgebildet, in der einzelne Fluoreszenzpartikel 2 erkennbar sind. In dem Trägermaterial 6 befinden sich zufällige Strukturen 4, wie beispielsweise Risse und Sprünge, die in der Farbschicht ausgebildet sind. Durch diese Strukturen 4 strahlen die Fluoreszenzpartikel 2 ihre Fluoreszenz bis zur Oberfläche und sind daher in Aufsicht erkennbar. Beim Auftragen eines Farbpulvers oder eines detektierbaren Stoffes werden die Strukturen 4 zum Teil gefüllt, wodurch ein verändertes Erscheinungsbild entsteht, welches die Position und die Intensität der Fluoreszenz der Fluoreszenzpartikel 2 beim Abtasten mit einer Abtasteinrichtung verändert.

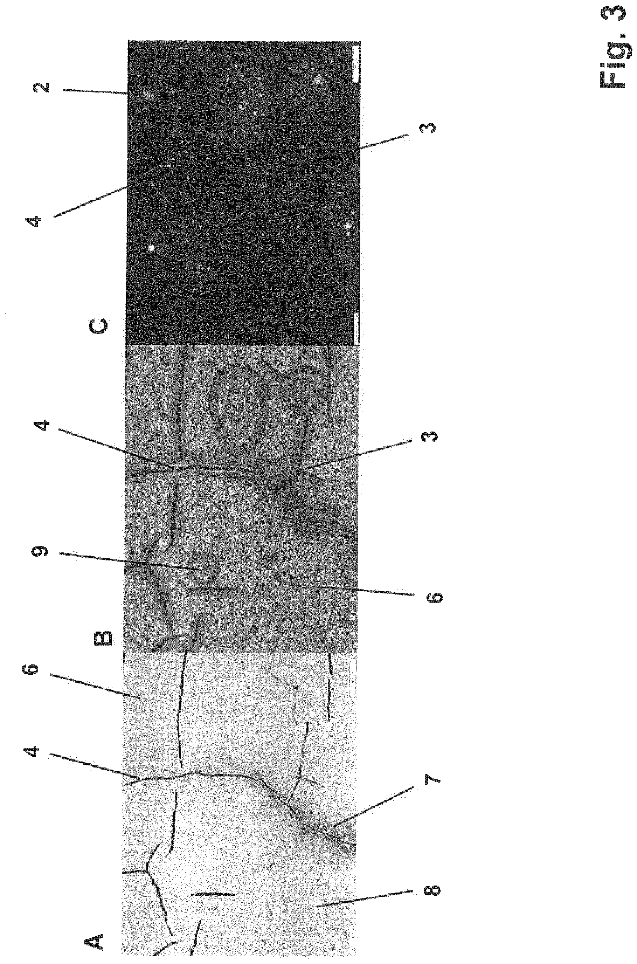

In Fig. 3 ist ein Sicherheitselement im Zweischichtaufbau (Farbschicht als Trägerschicht 6 und darunter liegende Fluoreszenzschicht 3) gezeigt, welches mit unterschiedlichem Licht abgetastet wurde. Das Ergebnis einer solchen Analyse mit unterschiedlichen Strahlungsquellen ist in den Fig. 3A-C dargestellt. Fig. 3A zeigt das Erscheinungsbild des Sicherheitselementes, welches unter Normallicht aufgenommen wurde. Hierbei sind deutlich die einzelnen Risse als Muster 4 in der Farbschicht (Trägerschicht 6) zu erkennen. Auch sind Bereiche mit Abschattungen 7 und Pigmentansammlungen 8 in der Trägerschicht zu erkennen. Fig. 3B zeigt das Erscheinungsbild desselben Sicherheitselementes, welches mit polarisierendem Licht aufgenommen wurde. Bereiche mit bestimmten Fluoreszenzansammlungen weisen eine charakteristische Ringstruktur 9 auf. Fig. 3C zeigt das Erscheinungsbild des Sicherheitselements, wenn von diesem eine Fluoreszenzaufnahme erstellt wird. Im Ausführungsbeispiel wurden zwei unterschiedliche Fluoreszenzfarbstoffe eingesetzt (nicht zu erkennen), die verschiedene Farbgebungen aufweisen. Deutlich sind die einzelnen Fluoreszenzpartikel 2 und deren Ansammlungen innerhalb der Fluoreszenzschicht 3 zu erkennen. Daneben sind weitere Fluoreszenzpartikel 2 in anderer Farbe innerhalb des Musters 4 und in den Bereichen des Trägermaterials 6 mit geringerer Schichtstärke zu erkennen. Werden alle drei Erscheinungsbilder der Fig. 3A-C beispielsweise einem Wertdokument, einer Person oder einem Dienst zugeordnet, so ist es einem Fälscher nahezu unmöglich, das Sicherheitselement zu kopieren, da er folglich all drei Erscheinungsbilder des Sicherheitselementes originalgetreu kopieren müsste.

## Patentansprüche

1. Sicherheitsvorrichtung, umfassend
- ein Sicherheitselement (1), welches ein Trägermaterial (6) umfasst, in dem ein dreidimensionales Muster mit Strukturen (4) wie Rissen, Rillen, Abplatzungen, Vertiefungen, Schuppen, Erhebungen und/oder Schrumpfungen als statisches oder dynamisches Sicherheitsmerkmal eingebettet sind,
- eine Abtasteinrichtung zum Erfassen eines Abbildes des Sicherheitselementes oder eines Teils davon,
- ein Speichermittel zum Hinterlegen des mit der Abtasteinrichtung erfassten Abbildes des Sicherheitselementes zu einem Authentifizierungszeitpunkt, wobei zusätzlich ein über die Abtasteinrichtung detektierbarer Stoff oder eine Stoffzusammensetzung zumindest teilweise in oder auf dem im Trägermaterial (6) eingebetteten dreidimensionalen Muster ab- oder eingelagert und auf dem Sicherheitselement neu aufbringbar oder entfernbar ist, wodurch sich die Farbe, die Intensität, die Struktur, die Schichtdicke, einzelne Pigmente oder eine andere physikalische Eigenschaft des Trägermaterials (6) und/oder des darin eingebetteten dreidimensionalen Musters des Sicherheitselementes (1) verändert, so dass ein zumindest teilweise verändertes Erscheinungsbild entsteht, welches zu einem Authentifizierungszeitpunkt von der Abtasteinrichtung erfassbar und in dem Speichermittel hinterlegbar ist, wobei das Trägermaterial (6) des Sicherheitselementes (1) von einer fluoreszierenden Schicht (3) mit darin integrierten fluoreszierenden Partikeln (2) oder einem beliebigen fluoreszierenden Farbstoff als zusätzliches Sicherheitsmerkmal begrenzt ist, wobei die von der Abtasteinrichtung erfasste Intensität der Fluoreszenz, Ausformung, Anordnung oder eine andere Eigenschaft der fluoreszierenden Partikel (2) oder des fluoreszierenden Farbstoffs der fluoreszierenden Schicht (3) beeinflusst ist von der Anordnung oder Struktur des Musters in dem Trägermaterial (6) und/oder der Farbe, der Intensität, der Struktur, der Schichtdicke oder einer anderen Eigenschaft des Trägermaterials und dass ferner unterschiedliche detektierbare Stoffe in dem Trägermaterial (6) und/oder in dem Muster eingelagert sind.

2. Sicherheitsvorrichtung nach Anspruch 1, **dadurch gekennzeichnet, dass** sich das Erscheinungsbild des Musters oder das Muster in dem Trägermaterial (6) in einem vorgegebenen Zeitraum dynamisch verändert, schrumpft oder weiterentwickelt.

3. Sicherheitsvorrichtung nach einem der vorhergehenden Ansprüche, **dadurch gekennzeichnet, dass** es sich bei dem Trägermaterial (6) um eine farbige Schicht, eine Farbschicht, eine Metallschicht, ein Material mit darin enthaltenen Farbpigmenten, Metallionen, Salzen oder strahlungsaktiven Stoffen, oder eine Kombination dieser Elemente handelt.

4. Sicherheitsvorrichtung nach einem der vorhergehenden Ansprüche, **dadurch gekennzeichnet, dass** der durch die Abtasteinrichtung detektierbare Stoff oder die Stoffzusammensetzung nur zeitweise in dem in dem Trägermaterial (6) eingebetteten dreidimensionalen Muster eingelagert ist.

5. Sicherheitsvorrichtung nach einem der vorhergehenden Ansprüche, **dadurch gekennzeichnet, dass** das Trägermaterial (6) einen Farbstoff enthält, dessen Zusammensetzung über die Abtasteinrichtung ermittelbar ist.

6. Sicherheitsvorrichtung nach einem der vorhergehenden Ansprüche, **dadurch gekennzeichnet, dass** das Trägermaterial (6) aus einem durch die Abtasteinrichtung detektierbaren Stoff besteht, der sich zeitlich zersetzt, von dem Trägermaterial (6) ablöst, farblich umwandelt oder auf andere Weise verändert, wodurch sich das von der Abtasteinrichtung erfassbare Erscheinungsbild des Trägermaterials (6) und/oder des Musters verändert.

7. Sicherheitsvorrichtung nach einem der vorhergehenden Ansprüche, **dadurch gekennzeichnet, dass** die fluoreszierenden Partikel (2) der fluoreszierenden Schicht (3) hauptsächlich durch die Strukturen (4) des Musters oder durch Bereiche des Trägermaterials mit geringerer oder transparenter Schichtstärke (5) als das Umgebungsmaterial sichtbar sind.

8. Sicherheitsvorrichtung nach einem der vorhergehenden Ansprüche, **dadurch gekennzeichnet, dass** am Sicherheitselement (1) zusätzlich Markierungen zur Bestimmung des Aufnahmewinkels der Abtasteinrichtung vorgesehen sind.

9. Sicherheitsvorrichtung nach einem der vorhergehenden Ansprüche, **dadurch gekennzeichnet, dass** zusätzlich ein Einwirkmittel vorgesehen ist, mit der das Trägermaterial (6) von dem Sicherheitselement (1) teilweise oder vollständig veränderbar, entfernbar oder auf diesem neu auftragbar ist.

10. Authentifizierungsverfahren, bei dem ein Sicherheitselement (1) verwendet wird, welches ein Trägermaterial (6) umfasst, in dem ein dreidimensionales Muster mit Strukturen (4) wie Rissen, Rillen, Abplatzungen, Vertiefungen, Schuppen, Erhebungen und/oder Schrumpfungen als statisches oder dynamisches Sicherheitsmerkmal eingebettet sind, wobei zusätzlich ein detektierbarer Stoff oder eine Stoffzusammensetzung in dem in das Trägermaterial eingebetteten dreidimensionalen Muster zumindest teilweise ab- oder eingelagert wird und auf dem Sicherheitselement durch einen inneren oder äußeren Einfluss neu aufgebracht oder entfernt wird, wodurch sich die Farbe, die Intensität, die Struktur, die Schichtdicke, einzelne Pigmente oder eine andere physikalische Eigenschaft des Trägermaterials und/oder des darin eingebetteten dreidimensionalen Musters des Sicherheitselementes verändert, so dass ein zumindest teilweise verändertes Erscheinungsbild erhalten wird, welches zum Authentifizierungszeitpunkt von einer Abtasteinrichtung erfasst und an ein Speichermittel übermittelt und in diesem hinterlegt wird, wobei an das Trägermaterial (6) des Sicherheitselementes (1) eine fluoreszierende Schicht (3) mit darin integrierten fluoreszierenden Partikeln (2) oder einem beliebigen fluoreszierenden Farbstoff als zusätzliches Sicherheitsmerkmal angeordnet wird, wobei die von der Abtasteinrichtung erfasste Intensität der Fluoreszenz, Ausformung, Anordnung oder eine andere Eigenschaft der fluoreszierenden Partikeln (2) oder des fluoreszierenden Farbstoffs der fluoreszierenden Schicht (3) beeinflusst wird von der Anordnung oder Struktur des Musters in dem Trägermaterial (6) und/oder der Farbe, der Intensität, der Struktur, der Schichtdicke oder einer anderen Eigenschaft des Trägermaterials (6) und dass ferner unterschiedliche detektierbare Stoffe in dem Trägermaterial (6) und/oder in dem Muster eingelagert werden.

11. Authentifizierungsverfahren nach Anspruch 10, **dadurch gekennzeichnet, dass** zur Schaffung eines dynamischen Sicherheitselementes mit einem sich verändernden Erscheinungsbild der durch die Abtasteinrichtung detektierbare Stoff oder die Stoffzusammensetzung in dem Trägermaterial oder in dem Muster des Sicherheitselementes sich durch äußere oder innere Einflüsse zeitlich zersetzt, zumindest teilweise entfernt oder erneuert, auf dem Sicherheitselement verlagert wird, oder sich von dem Sicherheitselement ablöst.

12. Authentifizierungsverfahren nach einem der Ansprüche 10 bis 11, **dadurch gekennzeichnet, dass** zur Schaffung eines dynamischen Sicherheitselementes mit verändertem Erscheinungsbild das Trägermaterial auf dem Sicherheitselement als Pulver, als Lack, als Klebstoff oder als Farbmischung flüssig oder trocken aufgetragen oder neu ergänzt wird.

13. Authentifizierungsverfahren nach einem der Ansprüche 10 bis 12, **dadurch gekennzeichnet, dass** die Abtasteinrichtung eine dreidimensionale Aufnahme des Sicherheitselementes oder eines Teils davon erstellt.

14. Authentifizierungsverfahren nach einem der Ansprüche 10 bis 13, **dadurch gekennzeichnet, dass** die Abtastung mit Licht unterschiedlicher Wellenlängen, polarisierendem Licht und/oder fluoreszierendem Licht erfolgt.

15. Authentifizierungsverfahren nach Anspruch 10, **dadurch gekennzeichnet, dass** in der fluoreszierenden Schicht ein detektierbarer Stoff oder eine Stoffzusammensetzung eingesetzt wird, welche dieselbe Materialzusammensetzung aufweist wie das Trägermaterial.

## Claims

1. A security device comprising
- a security element (1), which comprises a substrate (6), in which a three-dimensional pattern with structures (4) such as cracks, grooves, flaking, pits, scales, elevations and/or shrinkages, are embedded as static or dynamic security feature,
- a scanning device for capturing an image of the security element or a part thereof,
- a storage device for storing the image of the security element captured with the scanning device at an authentication point of time, whereby additionally a material that is detectable via the scanning device or a material composition, deposited or embedded in or on the three-dimensional pattern embedded in the substrate (6) and, if necessary, on the security element newly applicable or removable, whereby the colour, the intensity, the structure, the layer thickness, individual pigments or other physical property of the substrate (6) and/or the three-dimensional pattern of the security element (1), embedded therein, are changed, so that at least a partially altered appearance is obtained which is detectable during an authentication point of time by the scanning device and is storable in the storage device, wherein the substrate (6) of the security element (1) is restricted by a fluorescent layer (3) having fluorescent particles (2), integrated therein or an arbitrarily fluorescent dye, as an additional security feature, wherein the intensity, as captured by the scanning device, the shape, the arrangement or any other characteristic of the fluorescent particles (2) or of the fluorescent dye of the fluorescent layer (3) are influenced by the configuration or the structure of the pattern in the substrate (6) and/or the colour, the intensity, the structure, the layer thickness or other characteristic of the substrate.

2. The security device according to claim 1, **characterized in that** the appearance of the pattern or the pattern in the substrate (6) dynamically changes, shrinks or further develops in a specified period of time.

3. The security device according to any one of the preceding claims, **characterized in that** the substrate (6) is a matter of a coloured layer, a colour layer, a metal layer, a material with colour pigments contained therein, metal ions, salts or radiation-active materials, or a combination of these elements.

4. The security device according to any one of the preceding claims, **characterized in that** the material that is detectable by the scanner device or the material composition is only temporarily stored in the three-dimensional pattern embedded in the substrate (6).

5. The security device according to any one of the preceding claims, **characterized in that** the substrate (6) contains a dye, whose composition is detectable via the scanning device.

6. The security device according to any one of the preceding claims, **characterized in that** the substrate (6) consists of a material detectable by the scanning device, which disintegrates temporally, is detached from the substrate (6), is converted in colour or is changed in another manner, whereby the scanner-detectable appearance of the substrate (6) and/or of the pattern are changed.

7. The security device according to any one of the preceding claims, **characterized in that** the fluorescent particles (2) of the fluorescent layer (3) are visible mainly through the structures (4) of the pattern or through the areas of the substrate with a lower or transparent layer strength (5) than the surrounding material.

8. The security device according to any one of the preceding claims, **characterized in that** additional markings on the security element (1) are provided for determining the camera angle of the scanning device.

9. The security device according to any one of the preceding claims, **characterized in that** additionally an action means is provided, with which the substrate (6) is partially or completely alterable, removable or newly applicable on this by the security element (1).

10. An authentication method in which a security element (1) is used, which comprises a substrate (6), in which a three-dimensional pattern with structures (4) such as cracks, grooves, flaking, pits, scales, elevations and/or shrinkages is embedded as static or dynamic security feature, whereby additionally a detectable material or a material composition is at least partially deposited or stored in the three-dimensional pattern embedded in the substrate and if necessary, it is re-applied or removed on/from the security element through an internal or external influence, whereby the colour, the intensity, the structure, the layer thickness, individual pigments or another physical property of the substrate and/or of the three-dimensional pattern of the security element, embedded therein, are changed, so that at least a partially altered appearance is obtained, which is recorded at the authentication point of time by a scanning device and transmitted to a storage device and stored there, wherein a fluorescent layer (3) with fluorescent particles (2) integrated therein or any fluorescent dye is arranged on the carrier material (6) of the security element (1) as an additional security feature, wherein the intensity of the fluorescence detected by the scanning device, shape, arrangement or another property of the fluorescent particles (2) or the fluorescent dye of the fluorescent layer (3) is influenced by the arrangement or structure of the pattern in the carrier material (6) and/or the colour, intensity, structure, layer thickness or another property of the carrier material (6) and that further different detectable substances are incorporated in the carrier material (6) and/or in the pattern.

11. The authentication method according to claim 10, **characterized in that**, for creating a dynamic security element with a changing appearance, the material that is detectable by the scanning device or the material composition in the substrate or in the pattern of the security element is temporarily disintegrated by the external or internal influences, at least partially removed or replaced, will be displaced on the security element, or separated from the security element.

12. The authentication method according to any one of claims 10 to 11, **characterized in that** for creating a dynamic security element with an altered appearance, the substrate is applied or newly added in liquid or dry form on the security element as a powder, as a lacquer, as an adhesive or as a colour mixing.

13. The authentication method according to any one of claims 10 to 12, **characterized in that** the scanning device creates a three-dimensional image of the security element or a part thereof.

14. The authentication method according to any one of claims 10 to 13, **characterized in that** the scanning is performed using light of different wavelengths, polarizing light and/or fluorescent light.

15. The authentication method according to claim 10, **characterized in that** in a fluorescent layer a detectable material or a material composition is incorporated which exhibits the same material composition as the substrate.

## Revendications

1. Dispositif de sécurité comprenant
- un élément de sécurité (1) qui comprend un matériau de support (6) dans lequel un motif tridimensionnel avec des structures (4) telles que des fissures, des rainures, des éclats, des dépressions, des écailles, des élévations et/ou des retraits est intégré en tant que caractéristique de sécurité statique ou dynamique,
- un moyen de balayage pour capturer une image de l'élément de sécurité ou d'une partie de celui-ci,
- un moyen de stockage pour enregistrer l'image de l'élément de sécurité capturée par le moyen de balayage à un instant d'authentification, dans lequel, en outre, une substance ou une composition de substances détectable par le moyen de balayage est au moins partiellement déposée ou incorporée sur ou dans le motif tridimensionnel intégré dans le matériau de support (6) et peut être appliquée à nouveau sur l'élément de sécurité ou en être enlevée, changeant ainsi la couleur, l'intensité, la structure, l'épaisseur de couche, des pigments individuels ou une autre propriété physique du matériau de support (6) et/ou du motif tridimensionnel de l'élément de sécurité (1) qui y est intégré, de sorte qu'est produite une apparence au moins partiellement modifiée qui peut être détectée par le moyen de balayage à un instant d'authentification et peut être enregistrée dans le moyen de stockage, dans lequel le matériau de support (6) de l'élément de sécurité (1) est délimité par une couche fluorescente (3) dans laquelle sont intégrés des particules fluorescentes (2) ou un colorant fluorescent quelconque en tant que caractéristique de sécurité supplémentaire, l'intensité de la fluorescence, la forme, la disposition ou une autre propriété des particules fluorescentes (2) ou du colorant fluorescent de la couche fluorescente (3) détectée par le moyen de balayage étant influencée par la disposition ou la structure du motif dans le matériau de support (6) et/ou la couleur, l'intensité, la structure, l'épaisseur de couche ou une autre propriété du matériau de support, et en outre différentes substances détectables sont incorporées dans le matériau de support (6) et/ou dans le motif.

2. Dispositif de sécurité selon la revendication 1, **caractérisé en ce que** l'apparence du motif ou le motif dans le matériau de support (6) change, se rétracte ou se développe de manière dynamique dans une période de temps prédéfinie.

3. Dispositif de sécurité selon l'une des revendications précédentes, **caractérisé en ce que** le matériau de support (6) est une couche colorée, une couche de peinture, une couche métallique, un matériau contenant des pigments de couleur, des ions métalliques, des sels ou des substances radioactives, ou une combinaison de ces éléments.

4. Dispositif de sécurité selon l'une des revendications précédentes, **caractérisé en ce que** la substance ou la composition de substances détectable par le moyen de balayage n'est que temporairement incorporée dans le motif tridimensionnel intégré dans le matériau de support (6).

5. Dispositif de sécurité selon l'une des revendications précédentes, **caractérisé en ce que** le matériau de support (6) contient un colorant dont la composition peut être déterminée par le moyen de balayage.

6. Dispositif de sécurité selon l'une des revendications précédentes, **caractérisé en ce que** le matériau de support (6) est constitué d'une substance détectable par le moyen de balayage, qui se décompose avec le temps, se détache du matériau de support (6), change de couleur ou change d'une autre manière, modifiant ainsi l'apparence du matériau de support (6) et/ou du motif détectable par le moyen de balayage.

7. Dispositif de sécurité selon l'une des revendications précédentes, **caractérisé en ce que** les particules fluorescentes (2) de la couche fluorescente (3) sont principalement visibles à travers les structures (4) du motif ou à travers des zones du matériau de support ayant une épaisseur de couche (5) plus faible ou transparente que le matériau environnant.

8. Dispositif de sécurité selon l'une des revendications précédentes, **caractérisé en ce que** des marquages supplémentaires pour déterminer l'angle de prise de vue du moyen de balayage sont prévus sur l'élément de sécurité (1).

9. Dispositif de sécurité selon l'une des revendications précédentes, **caractérisé en ce qu'**il est en outre prévu un moyen d'action avec lequel le matériau de support (6) peut être partiellement ou complètement modifié, enlevé de l'élément de sécurité (1) ou appliqué à nouveau sur celui-ci.

10. Procédé d'authentification dans lequel on utilise un élément de sécurité (1) qui comprend un matériau de support (6) dans lequel un motif tridimensionnel avec des structures (4) telles que des fissures, des rainures, des éclats, des dépressions, des écailles, des élévations et/ou des retraits est intégré en tant que caractéristique de sécurité statique ou dynamique, dans lequel, en outre, une substance ou une composition de substances détectable est au moins partiellement déposée ou incorporée dans le motif tridimensionnel intégré dans le matériau de support et appliquée à nouveau sur l'élément de sécurité ou enlevée de celui-ci par une influence interne ou externe, changeant ainsi la couleur, l'intensité, la structure, l'épaisseur de couche, des pigments individuels ou une autre propriété physique du matériau de support et/ou du motif tridimensionnel de l'élément de sécurité qui y est intégré, de sorte que l'on obtient une apparence au moins partiellement modifiée qui est détecté par un moyen de balayage à l'instant d'authentification et qui est transmise à un moyen de stockage et enregistrée dans celui-ci, dans lequel une couche fluorescente (3) dans laquelle sont intégrées des particules fluorescentes (2) ou un colorant fluorescent quelconque est disposée sur le matériau de support (6) de l'élément de sécurité (1) en tant que caractéristique de sécurité supplémentaire, l'intensité de la fluorescence, la forme, la disposition ou une autre propriété des particules fluorescentes (2) ou du colorant fluorescent de la couche fluorescente (3) détectée par le moyen de balayage étant influencée par la disposition ou la structure du motif dans le matériau de support (6) et/ou la couleur, l'intensité, la structure, l'épaisseur de couche ou une autre propriété du matériau de support, et en outre différentes substances détectables sont incorporées dans le matériau de support (6) et/ou dans le motif.

11. Procédé d'authentification selon la revendication 10, **caractérisé en ce que**, pour créer un élément de sécurité dynamique ayant une apparence changeante, la substance ou la composition de substances dans le matériau de support ou dans le motif de l'élément de sécurité qui est détectable par le moyen de balayage se décompose avec le temps, est au moins partiellement enlevée ou renouvelée, déplacée sur l'élément de sécurité, ou se détache de l'élément de sécurité sous l'effet d'influences externes ou internes.

12. Procédé d'authentification selon l'une des revendications 10 à 11, **caractérisé en ce que**, pour créer un élément de sécurité dynamique ayant une apparence modifiée, le matériau de support est appliqué ou complété sur l'élément de sécurité sous forme liquide ou sèche sous forme de poudre, de peinture, d'adhésif ou de mélange de couleurs.

13. Procédé d'authentification selon l'une des revendications 10 à 12, **caractérisé en ce que** le moyen de balayage réalise une prise de vue tridimensionnelle de l'élément de sécurité ou d'une partie de celui-ci.

14. Procédé d'authentification selon l'une des revendications 10 à 13, **caractérisé en ce que** le balayage est effectué avec une lumière de différentes longueurs d'onde, une lumière polarisante et/ou une lumière fluorescente.

15. Procédé d'authentification selon la revendication 10, **caractérisé en ce qu'**on utilise dans la couche fluorescente une substance ou une composition de substances détectable qui présente la même composition matérielle que le matériau de support.
